# EUROPEAN PATENT SPECIFICATION

(11) **EP 3 613 962 B1**
(45) Date of publication and mention of the grant of the patent: **09.03.2022**
(21) Application number: 19193460.3
(22) Date of filing: 23.08.2019
(51) Int. Cl.: F02B 37/04, F02B 29/04, F01N 5/02

(54) **HEAT PUMP SYSTEM AND METHOD FOR CONTROLLING THE SAME**
WÄRMEPUMPENSYSTEM UND VERFAHREN ZUR STEUERUNG DAVON
SYSTÈME DE POMPE À CHALEUR ET SON PROCÉDÉ DE COMMANDE

(30) Priority: 24.08.2018 KR 20180099206
(43) Date of publication of application: 26.02.2020
(73) Proprietor: LG ELECTRONICS INC., Yeongdeungpo-Gu Seoul 07336 (KR)
(72) Inventor: JANG, Heejoong, 08592 SEOUL (KR); CHOI, Song, 08592 SEOUL (KR)
(74) Representative: Plasseraud IP

(56) References cited:
- EP-A1- 3 343 004
- DE-A1- 10 344 416
- DE-A1-102015 211 437
- KREBS R ET AL: "Neuer Ottomotor mit Direkteinspritzung und Doppelaufladung von Volkswagen. Teil 1: Konstruktive Gestaltung", MTZ - MOTORTECHNISCHE ZEITSCHRIFT, SPRINGER, vol. 66, no. 11, 1 November 2005 (2005-11-01), pages 844-856, XP001519227, ISSN: 0024-8525

## Description

### [FIELD]

Embodiments of the present disclosure relate to a heat pump system, more particularly, a heat pump that may control variation of an engine operation rotation number and a method for controlling the same.

### [BACKGROUND]

Generally, a heat pump system includes a compressor configured to compress a refrigerant; an indoor heat exchanger configured to exchange heat with room air; an expansion valve configured to expand the refrigerant; and an outdoor heat exchanger configured to exchange heat with outdoor air.

The compressor and the outdoor heat exchanger may be provided in an outdoor unit. The expansion valve and the indoor heat exchanger may be provided in an indoor unit. As occasion occurs, the expansion valve may be provided in the outdoor unit.

The compressor may be driven by an engine. In other words, such an engine may provide a driving force to the compressor by combusting a mixed gas of air and fuel.

At this time, many means for increasing drive efficiency of such an engine are looked for. As one example, a turbo charger is installed in the engine.

However, such a turbo charger has an optimal efficiency in a range in which the engine has a high rotation number. There are demands for means that may have an optimal efficiency by supplementing that.

### [DETAILED DESCRIPTION OF THE INVENTION]

### [TECHNICAL PROBLEM]

To overcome the disadvantages, an object of the present invention is to address the above-noted and other problems and to provide a heat pump system that may drive an engine according to the rotation number with optical efficiency and a method for controlling the same.

Another object of the present invention is to provide a heat pump system that may enhance efficiency in using a super charger in a low engine rotation number range and a turbo charger in a low engine rotation number range, and a method for controlling the same.

### [TECHNICAL SOLUTION]

To achieve these objects and other advantages and in accordance with the purpose of the embodiments, as embodied and broadly described herein, a heat pump system comprises a compressor configured to compress a refrigerant of an air condition; an engine configured to drive the compressor and comprising an suction unit and an exhaust unit; a mixer configured to supply a mixed gas of a fuel and air towards the suction unit of the engine; a turbocharger comprising a turbine wheel connected to the exhaust unit of the engine and rotatable by an exhaust gas, and an impeller connected to the turbine wheel via a shaft and configured to compress the mixed gas; a supercharger connected with the turbocharger in parallel between the mixer and the suction unit of the engine; an intercooler configured to cool the mixed gas having passed at least one of the turbocharger and the supercharger; and an exhaust gas heat exchanger connected to a rear end of the turbine wheel in the exhaust suction of the engine.

The turbocharger may be installed in a first passage branched from the mixer to one side and having a first check valve installed therein, and the supercharger may be installed in a second passage branched from the mixer to the other side and having a second check valve installed therein.

The heat pump system may further comprise a third passage connected with the intercooler without passing the turbocharger and the supercharger from the mixer and having a third check valve installed therein.

As the rotation number of the engine rises, the mixed gas may be supplied via the third check valve along the third passage and then via the second check along the second passage by the supercharger, and via the first check valve along the first passage by the turbocharger.

The operation region of the engine may comprise a natural suction region, a supercharger operation region using the supercharger, and a turbocharger operation region using the turbocharger.

The supercharger operation region and the turbocharger operation region may be overlapped with each other in a first rotation region that is a range between predetermined rotation numbers of the engine.

The first rotation region may be 1600 ~ 1750rpm.

The heat pump system may further comprise an exhaust bypass channel configured to bypass an exhaust gas from the exhaust unit of the engine, without passing the turbine wheel of the turbocharger, and having a bypass valve installed therein.

In another aspect of the present invention, a method for controlling a heat pump system comprising a mixer configured to supply a mixed gas of a fuel and air towards the suction unit of the engine; a turbocharger comprising a turbine wheel connected to the exhaust unit of the engine and rotatable by an exhaust gas, and an impeller connected to the turbine wheel via a shaft and configured to compress the mixed gas; a supercharger connected with the turbocharger in parallel between the mixer and the suction unit of the engine; and an exhaust bypass channel configured to bypass an exhaust gas from the exhaust unit of the engine, without passing the turbine wheel of the turbocharger, and having a bypass valve installed therein, the control method comprises steps of: supplying natural air by opening the bypass valve when the engine rotation number is in a first region; driving the supercharger when the engine rotation number is in a second region that is larger than the first region; closing the exhaust bypass channel; reducing the rotation number of the supercharger gradually; and operating the engine by driving the turbocharger when the engine rotation number is in a third region that is larger than the second region.

The method for controlling the heat pump system may further include compensating the rotation number of the supercharger after driving the supercharger.

The step of compensating the rotation number of the supercharger may be performed to increase the rotation number of the supercharger.

The second region may be overlapped with the third region at a first rotation number region.

The first rotation number region may be 1600~1750rpm.

The supercharger and the turbocharger may be simultaneously driven in the first rotation number region.

The method for controlling the heat pump system may further include re-determining the speed and load of the engine, wherein as the rotation number of the engine rises, the engine is operated by fixing the rotation of the turbocharger or the step of supplying the natural air is performed.

### [ADVANTAGEOUS EFFECTS]

Accordingly, the embodiments have following advantageous effects. According to at least one embodiment of the present disclosure, the engine may be driven by the respective optimal performance operation points of the supercharger and the turbocharger, using the parallel configuration of the supercharger and the turbocharger.

Furthermore, the mixed gas may not flow back to the other one that is not driven when the supercharger and the turbocharger are operated, respectively. Accordingly, the output and efficiency of the engine may be enhanced in the entire operation region.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### [BRIEF DESCRIPTION OF THE DRAWINGS]

The present invention will become more fully understood from the detailed description given herein below and the accompanying drawings, which are given by illustration only, and thus are not limitative of the present invention, and wherein:
FIG. 1 is a conceptual diagram schematically illustrating one example of a heat pump system to which the present invention is applicable;
FIG. 2 is a diagram schematically illustrating a heat pump system according to a first embodiment of the present invention;
FIG. 3 is a graph illustrating an operation range of a heat pump system according to one embodiment;
FIG. 4 is a diagram schematically illustrating a heat pump system according to another embodiment of the present invention;
FIG.5 is a diagram schematically illustrating a method for controlling the heat pump system according to one embodiment of the present invention; and
FIG. 6 is a diagram schematically illustrating a method for controlling the heat pump system according to another embodiment of the present invention.

### [DESCRIPTION OF SPECIFIC EMBODIMENTS]

Referring to the accompanying drawings, exemplary embodiments of the present disclosure will be described in detail. Regardless of numeral references, the same or equivalent components may be provided with the same reference numbers and description thereof will not be repeated.

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that when an element is referred to as being "arranged on" another element, the element can be directly connected with the other element or intervening elements may also be present between them.

It will be understood that although the terms first, second, etc. may be used herein to describe various elements, these elements should not be limited by these terms. These terms are generally only used to distinguish one element from another.

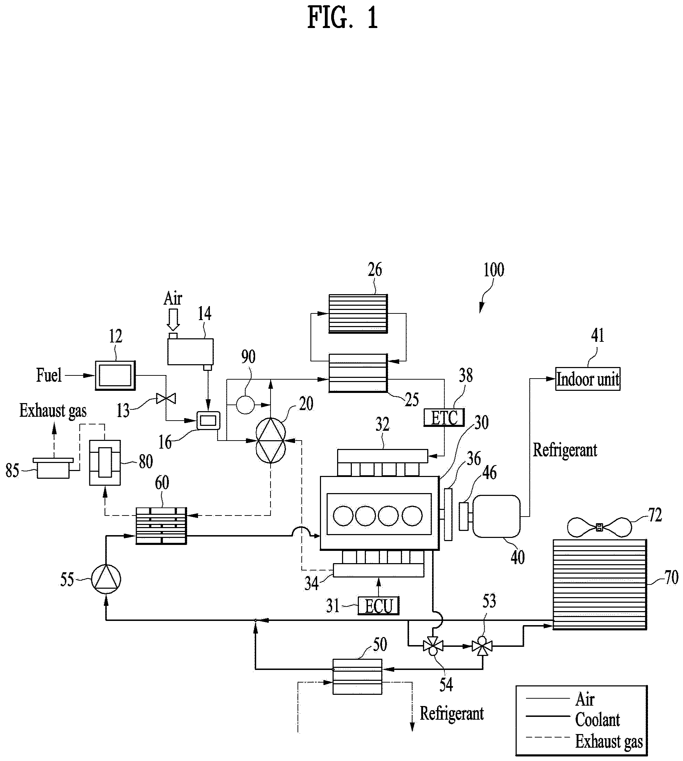

FIG. 1 is a conceptual diagram schematically illustrating one example of a heat pump system to which the present invention is applicable.

The heat pump system 100 means a system that actuates an engine 30 by using a gas fuel and drives a compressor 40 of an air conditioner by using a driving force of the engine 30 to perform air conditioning.

The gas fuel may be supplied by a zero governor 20 while consistently maintaining a uniform outlet pressure, regardless of a type of an inlet flow amount variation. The zero governor 12 may be configured to gain a stable outlet pressure over a wide range and adjust the pressure of the gas fuel supplied to the engine as atmosphere. In addition, the zero governor 12 may include two solenoid valves to shut off the supplied fuel.

Air is filtered via an air cleaner 14 to be clean air and clean air may be supplied. Such air cleaner 14 may shut off dust and a mist type of moisture or oil from being drawn therein and mixed with the air by using a filter.

The gas fuel and gas supplied as described above may be mixed into a mixed gas having a uniform mixture rate of the gas to the fuel by a mixer 16 and the mixed gas may be sucked into the engine.

A fuel valve 13 may be provided in an inlet hole of the mixer 16 to adjust the amount of the supplied gas fuel that is mixed with air. If much gas fuel is supplied, the mixture ratio of the air to the fuel might increase.

A turbo charger 20 may be configured to compress the mixed gas into a high-temperature-and-high-pressure state gas. The turbo charger 20 may rotate a turbine by using exhaust gas and then compress the sucked air by using the rotation force to send the compressed air to a cylinder of the engine and raise the output.

The turbo charger 20 is a mixed terminology of Turbine and Super charger and configured of a turbine and an air compressor directly connected to the turbine. Energy of exhaust gas rotates a turbine to suck air wheel and the sucked air may be compressed by the air compressor only to transfer the compressed air to the cylinder.

In such the turbo charger 20, a turbine wheel having a blade and an impeller of the air compressor may be connected to one shaft and they are surrounded respective housings. Also, the turbo chamber 20 may be arranged adjacent to an exhaust manifold of the engine.

The mixed gas may be compressed by the turbo charger 20 and the temperature of the mixed gas may rise such that it may be cooled by an intercooler 25 and then drawn into the engine 30 through a mixed air manifold 32. The intercooler 25 may configured to increase the absolute quantity of the mixed gas drawn into the engine by cooling the mixed air to increase the intensity and then enhance the engine output accordingly.

In this instance, a super charger 90 may be provided between the mixer 16 and the suction manifold 32 of the engine 30, while being connected with the turbo charger 20 in parallel, and configured to compress the mixed gas.

Such the turbo charger 20 and the super charger 90 may be selectively driven. Neither of the turbo charger 20 and the super charger 90 may be driven but the mixed gas may be supplied to the engine 20 according to a natural suction method.

At this time, an operation range of the engine 30 may include a natural suction region; supercharger operation region using the supercharger 90 and a turbocharger operation region using the turbocharger 20.

In addition, the supercharger operation region and the turbocharger operation region may be overlapped with each other at a first rotation number region that is a predetermined rotation number region of the engine 30. Then, the first rotation number region may be 1600 through 1750rpm. The method for operating the supercharger 90 and the turbocharger 20 will be described in detail.

The intercooler 25 may form an air cooling heat exchange channel using air in cooling the mixed gas or a water-cooling heat exchange channel using water in cooling the mixed gas. The water cooling intercooler may use the coolant as a medium and include an auxiliary heat exchanger and a pump to transfer the heat gained from the compressed mixed gas outside.

A throttle valve 38 may be provided between such the intercooler 25 and the manifold to adjust the amount of the mixed gas drawn into the engine 30. The throttle valve may be generally an electronic throttle valve (ETC valve).

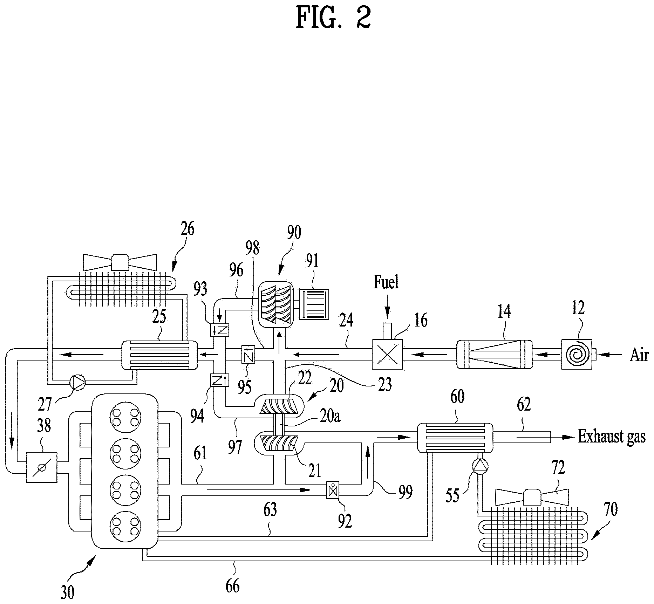

An auxiliary engine control unit (ECT) 31 may control diverse control variables that are related to the control of the engine. As one example, the ECT 31 may control the ETC valve 38 and s control period of the valve. Alternatively, an electricity generation control unit (94, see FIG. 2) configured to control the overall engine electricity generation system may control the ECU 31.

The engine 30 is an internal combustion engine configured to perform four cycles of suction, compression, combustion and exhaustion for the mixed gas drawn via a suction manifold 32. At this time, a combustion cycle may be actuated by a spark plug installed in the engine and the ECU 31 may adjust an ignition angle by controlling a combustion point via the spark plug.

The exhaust gas generated as the engine 30 is actuated may be discharged via an exhaust manifold 34. At this time, an impeller of the turbo charger 20 is rotated.

The engine may drive the air conditioner by rotating the compressor 40. Such the air conditioner may include an indoor unit for conditioning indoor air. For that, a belt may be connected between a pulley 36 provided in one end of the shaft provided in the engine 30 and a pulley 46 provided in one end of a shaft of the compressor 40.

Meanwhile, the engine 30 may suck a high-temperature heat that is generated therein by exchanging heat with the circulating coolant, as quite a heat is generated during the actuation enabled by gas combustion.

A radiator may be installed in a coolant circulation channel in a vehicle to throw away the waste heat of the engine. In contrast, the heat generated in the engine is sucked to make warm water and the warm or heated water is used in the heat pump system 100.

For that, a heated water heat exchanger 50 may be provided in the coolant circulation channel to exchange heat between the coolant and the water additionally supplied such that the supplied water can be supplied heat from the high-temperature coolant.

Unless the heated water is used by a heated water demander, no water is supplied to the heated-water heat exchanger 50 and the temperature of the coolant could rise. To prevent that, an auxiliary heat radiator 70 may be installed to waste the heat of the coolant.

The heat radiator 70 may be radiate heat while a plurality of fins is exchanging heat between the high-temperature coolant and air. The heat radiator 70 may include a heat radiation fan 72 to promote heat radiation.

The channel of the coolant flowing from the engine 30 may be branched to the heated-water heat exchanger 50 and the heat radiator 70. An engine 3-way valve 54 may be installed at a branched spot and a radiator 3-way valve 53 may be installed in the engine 3-way valve 53 to control the flow direction of the coolant as occasion occurs.

The coolant may be transferred only to the heated water heat exchanger 50 or only to the heat radiator 70 by the two 3-way valves 53 and 54. If occasion occurs, the coolant may be dividedly transferred to both the heated water heat exchanger 50 and the heat radiator 70 by a preset ratio.

The coolant heat-radiated by the heat radiator 70 once passing through the radiator 3-way valve 53 may be mixed with the coolant heat-exchanged by the heated water heat exchanger 50 once passing through the engine 3-way valve 54. After that, the mixed coolant may be drawn into the engine 30.

A coolant pump 55 may be installed in the coolant circulation channel to adjust the speed of the flowing coolant. The coolant pump 55 may be installed in downstream of the heated-water heat exchanger 50 and the heat radiator 70 and an upstream of the engine 30.

Meanwhile, the exhaust gas discharged from the exhaust manifold 34 of the engine 30 is able to actuate the turbo charger 20. To collect the waste heat of the exhaust gas, an exhaust gas heat exchanger 60 may be provided.

The exhaust gas heat exchanger 60 may be installed between the coolant pump 55 and the upstream of the engine 30 and configured to exchange heat between the exhaust gas and the coolant. The waste heat of the exhaust gas may be collected by the exhaust has heat exchanger 60.

The coolant is drawn into the engine 30 in a state of being heated as warm water while passing the exhaust gas heat exchanger 60. However, even such a stated coolant is able to cool the engine 30 sufficiently.

The exhaust gas heat-radiated while passing the exhaust gas heat exchanger 60 may pass a muffler 80 and exhaust noise of the engine may be reduced by the muffler 80.

The exhaust gas having passed the muffler 80 may pass a drain filter 85 to be discharged outside. A water-purifying stone may be embedded in the drain filter 85 to purify the condensate generated in the muffler 80 and the exhaust gas line such that the drain filter can neutralize an acid condensate and discharge the neutralized condensate outside.

FIG. 2 is a diagram schematically illustrating a heat pump system according to a first embodiment of the present invention.

Referring to FIG. 2, air is drawn into the mixer 16 via the zero governor 12 and the air cleaner 14 and the mixer 16 may mix the air with fuel. The mixed gas may be supplied to the suction manifold 32 via the suction channel 24.

In this instance, the suction channel 24 may be branched to be a branched channel 23 having one end connected to the turbocharger 20 and the other end connected to the supercharger 90.

Specifically, one end of the branched channel 23 may be connected to a first passage 97 connected to the turbocharger 20 and the other end may be connected to a second passage 96 connected to the supercharger 90.

Here, the supercharger 90 may mean a device configured to compress and supply the mixed air by using an impeller driven by a motor 91.

In addition, a third passage 98 may be further provided to suck the mixed gas towards the engine 30, without passing the turbocharger 20 and the supercharger 90.

A first check valve 94 may be installed in the first passage 97 and a second check valve 93 may be installed in the second passage 96.

A third check valve 95 may be installed in the third passage 98. The process of sucking the mixed gas towards the engine 30 without passing the turbocharger 20 and the supercharger 90 may be referred to as the natural suction.

Accordingly, the flow of the mixed gas may be adjusted by using the first passage 97, the second passage 96 and the third passage 98.

Such the first passage 97, the second passage 96 and the third passage 98 may be re-combined as one channel only to pass through the intercooler 25.

In other words, the air while being compressed by the turbocharger 20 and/or the supercharger 90 may be chilled in the intercooler 25.

In such the intercooler 25 may be installed the air cooling or water cooling heat exchanger 26 as mentioned above. In case of using the water cooling heat exchanger, the coolant may be used as the medium or an auxiliary pump 27 may be provided.

Accordingly, the operation of the first, second and third check valves 93, 94 and 95 may draw the mixed gas into the engine 30 according to the natural suction method. Or, the mixed gas may compressed (or supercharged) via at least one of the turbocharger 20 and the supercharger 90 and then the temperature raised during the supercharging process may be partially cooled while the mixed gas passing the intercooler to be drawn into the engine 30 via the ETC valve 38.

At this time, the first, second and third check valves 93, 94 and 95 may be operated by the actuation of the turbocharger 20 and the supercharger 90 or closed to prevent backflow unless they are actuated.

The mixed gas drawn into the engine 30 via the suction unit (32, the suction manifold) may be combusted in the engine 30 and the exhaust gas may be then discharged to a middle exhaust pipe 61 via the exhaust unit (34, the exhaust manifold).

In this instance, the exhaust pipe 61 may be connected with a turbine wheel 21 and the exhaust gas passing the turbine wheel 21 after passing the middle exhaust pipe 61 may actuate the turbocharger 20.

Meanwhile, an exhaust bypass channel 99 may be provided in the middle exhaust pipe 61 and a bypass valve 82 may be installed in the exhaust bypass channel 99.

Accordingly, when the exhaust gas is discharged through the exhaust bypass channel 99 upon opening the exhaust bypass valve 92, much exhaust gas may not pass the turbine wheel 21 of the turbocharger 20 enough not to actuate the turbocharger 20 substantially.

The middle exhaust pipe 61 and the exhaust bypass channel 99 may be re-combined as one channel and the exhaust gas may pass the exhaust gas heat exchanger 60. The exhaust gas passing the exhaust gas heat exchanger 60 may be discharged via the exhaust pipe 62.

At this time, the heat radiator 70 having the heat radiation fan 72 may be connected to the exhaust gas heat exchanger 60. As mentioned above, the exhaust gas heat exchanger 60 may be installed between the coolant pump 55 and the upstream of the engine 30 within the coolant circulation channel. The exhaust gas heat exchanger may facilitate heat exchange between the exhaust gas discharged via the turbocharger 20 and the coolant and also collect the waste heat of the exhaust gas.

The coolant circulated by the coolant pump 55 may be drawn into the engine 30 via an inlet pipe 63 by the exhaust gas heat exchanger 60. The coolant having passed the engine 30 may be drawn into the heat radiator 70 and then circulated by the coolant pump 55 to flow towards the exhaust gas heat exchanger 60 again.

As mentioned above, the turbocharger 20 may be installed in the first passage 97 branched from the mixer 16 and the first passage 97 has the first check valve 94 installed therein. The supercharger 90 may be installed in the second passage 96 branched to the other side from the mixer 16 and the second check valve 93 may be installed in the second passage 96.

In addition, the third check valve 95 may be installed in the third passage 98 for the natural suction.

According to this embodiment, in this state, the rotational number of the engine 30 may rise and the mixed gas may be supplied along the third passage 98 via the third check valve 95 (the natural suction) by the supercharger 90. After that, the mixed gas may be supplied along the second passage 96 via the first check valve 94 by the supercharger 90. Hence, the mixed gas may be supplied along the first passage 97 via the first check valve 94 by the turbocharger 20.

Specifically, as the rotation number (rpm) of the engine 30 rises, the operation region of the engine 30 may include the natural suction region, the supercharger operation region and the turbocharger operation region.

At this time, the supercharger operation region and the turbocharger operation region may be overlapped with each other at the first rotation number region that is a region having predetermined rotation of the engine 30.

Such the first rotation number region may 1600 through 1750rpm.

Unless the turbocharger 20 is actuated, the exhaust bypass valve 92 may be open to allow much exhaust gas not to flow towards the turbine wheel 21 of the turbocharger 20 upon discharging the exhaust gas via the bypass channel 99.

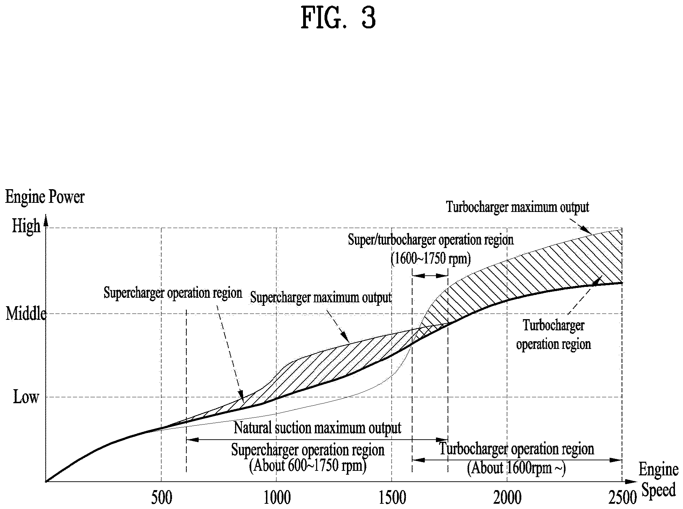

FIG. 3 is a graph illustrating an operation range of a heat pump system according to one embodiment.

In other words, FIG. 3 illustrates respective states of the natural suction, the supercharging and the turbocharging.

Hereinafter, referring to FIGS. 2 and 3, the operation of the engine 30 will be described in detail by switching the natural suction operation, the supercharger operation and the turbocharger operation.

### 1. The natural suction operation:

The engine system is drive by a low temperature (2.5kPa) gas supplied from a gas line. In a first condition, for example, in which the rotation number of the engine is lower than approximately 600rpm, with approximately less than 80% of the natural suction output, the supercharger 90 is not operated but the engine 30 may be operated according to the natural suction.

At this time, when the engine is operated by the natural suction without driving the supercharger 90, the mixed gas will not be supercharged and the coolant pump 27 connected with the intercooler 25 will not be driven accordingly. Since the supercharger 90 is not driven, the power consumption of the system will be lowered enough to enhance the efficiency of the system.

The bypass valve 92 may be open on the exhaust line not to rotate the turbine wheel of the turbocharger 20. Accordingly, the operation condition of the engine 30 may be configured so as to maximize the improvement of the engine output by reducing the exhaust resistance caused by the natural suction.

### 2. The supercharger operation:

The supercharger operation is an engine system configured to drive the engine by using a low-pressure (2.5kPa) gas supplied from a gas line. In a second condition, for example, in which the rotation number of the engine is approximately 1600rpm or lower, with approximately 80% or more of the natural suction output, the supercharger 90 may be driven to raise the rotation number gradually and the natural suction may be switched into the supercharging.

In other words, the natural suction method is switched into the supercharging method. The mixed gas supercharged at this time may be cooled in the intercooler 25 and then supplied to the engine 30, without flowing back to the suction end via the second check valve 93.

The supercharger 90 may control the amount of the mixed gas that is supercharged and supplied to the engine, while the rotation number varies up to 70Krpm.

The mixed gas supercharged as mentioned above may be supplied to the intercooler 25 in a high-temperature-and-high-pressure state and changed into a low or middle temperature and high-temperature mixed gas to be supplied to the engine 30.

After being combusted in the engine 30, the exhaust gas having a temperature of approximately 600 degrees may exchange heat with the coolant while passing the exhaust gas heat exchanger 60, to be discharged and exhausted outside, with a temperature of approximately 70 degrees.

When the natural suction engine requires the output of the maximum 80% or more, the output that is relatively high near a low engine rotation number (e.g., 600 through 1750rpm) may be gained once the supercharger 90 is driving the engine.

### 3. The turbocharger operation:

The supercharger operation is an engine system configured to drive the engine by using a low-pressure (2.5kPa) gas supplied from a gas line. In a condition in which the rotation number of the engine is approximately 1600rpm or higher, the turbocharger 20 may be driven by controlling the bypass valve 92 to drive the engine. Accordingly, the output of the engine may be improved. In general, a boosting effect of the turbocharger 20 is expected lower or higher than approximately 1600rpm.

As the engine rotation number rises, the turbocharger 20 is driven and the bypass valve 92 is closed so as to draw the high-temperature-and-high-pressure exhaust gas to both the turbocharger 20 and the turbine wheel 21. Accordingly, the mixed gas may be supercharged by using the turbocharger 20.

However, if the suction pressure is improved by a too much amount of supercharged mixed gas according to a version of the turbocharger 20, the bypass valve 92 may be open to prevent the turbocharger 20 and a predetermined amount of the exhaust gas may be bypassed to reduce the amount of the supercharged mixed gas.

The mixed gas may be changed into a high-temperature-and-high-pressure gas by the driving of the turbocharger 20. When the mixed gas has the high temperature, the intensity becomes high enough to lower combustion efficiency. Accordingly, the intercooler 25 is driven to change the supercharged mixed gas into a low or middle-temperature-and-high-pressure mixed gas and the low or middle-temperature-and-high-pressure mixed gas may be supplied to the engine 30 to improve the output of the engine.

As mentioned above, the supercharging effect may be expected up to the maximum of 1750rm when driving only the supercharger 90 and 1600rpm when driving only the turbocharger 20.

In other words, only the supercharger 90 may be driven approximately to 1650rpm upon starting the engine to improve the output and efficiency of the engine in comparison with the natural suction. After that, when the turbocharger 20 is smoothly operated by the close of the exhaust gas bypass valve 92, the rotation number of the supercharger 90 may gradually decrease and the supercharging drive may be controlled to be switched into the only turbocharger operation.

Hence, the turbocharger 20 may be operated in the engine operation region to improve the engine output and efficiency according to the turbocharger.

When the engine operation region gradually decreases during the operation of the turbocharger 20, the supercharger 90 may be additionally driven according to the engine operation region upon reaching a preset rotation number so as to keep the engine output.

At this time, the exhaust gas bypass valve 92 may be gradually open not to draw the exhaust gas towards the turbine wheel 21 of the turbocharger 20 and the driving of the turbocharger 20 may be then lowered. Accordingly, as the bypass valve 92 is getting open, the driving rotation number of the supercharger 90 may be compensated (or reduced) to keep the output of the engine steadily.

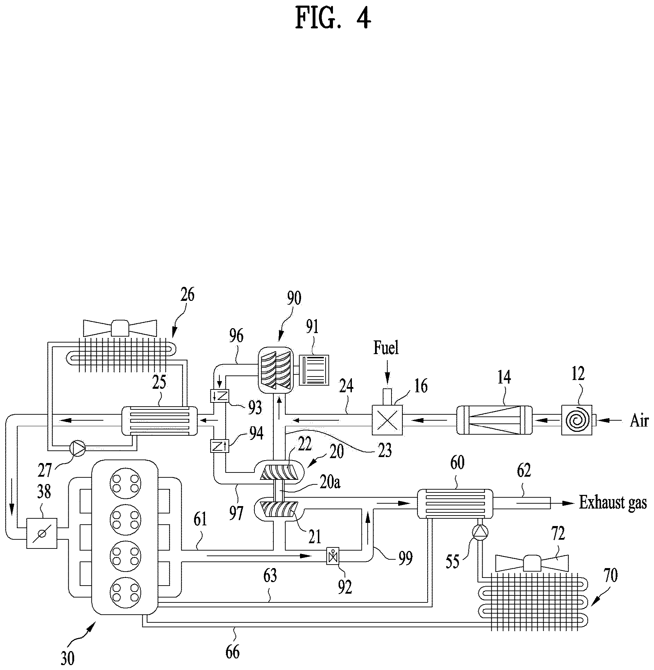

FIG. 4 is a diagram schematically illustrating a heat pump system according to another embodiment of the present invention.

Referring to FIG. 4, air may be drawn into the mixer 16 after passing the zero governor 12 and the air cleaner 14. The air may be mixed with a fuel in the mixer 16 and the mixed gas may be supplied to the engine suction unit 32 via the suction channel 24.

At this time, a branched channel 23 may be connected to the suction channel 24. One end of the branched channel 23 may be connected to the turbocharger 20 and the other end may be connected to the supercharger 90.

Specifically, one end of the branched channel 23 may be connected with the first passage 97 connected with the turbocharger 20. The other end of the branched channel 23 may be connected with the second passage 96 connected with the supercharger 90.

Hence, the first check valve 94 may be installed in the first passage 97 and the second check valve 93 may be installed in the second passage 96, such that the flow of the mixed gas may be controlled by using the first passage 97 and the second passage 96.

Such the first and second passages 87 and 96 may be combined into one channel to be connected with the intercooler 25.

In other words, the air having the temperature raised while being compressed by the turbocharger 20 and/or the supercharger 90 can be cooled by the intercooler 25.

Such the intercooler 25 may have the air-cooling or water-cooling heat exchanger 26 installed therein as mentioned above. When the water cooling heat exchanger is provided, the coolant may be used as the medium and an auxiliary pump 27 may be provided.

As described above, the mixed gas may be compressed by the operation of the first and second check valves 93 and 94 while passing at least one of the turbocharger 20 and the supercharger 90. The temperature of the mixed air that is raised during the supercharging process may be partially cooled while passing the intercooler 25 and drawn into the engine 30 via the ETC valve 38.

The mixed gas drawn into the engine 30 vi the suction unit (32, the suction manifold) may be combusted in the engine 30 and the combusted exhaust gas may be discharged to the middle exhaust pipe 61 via the exhaust unit (34, the exhaust manifold).

At this time, the exhaust pipe 61 may be connected with the turbine wheel 21 of the turbocharger 61 such that the turbocharger 20 may be operated while the exhaust gas is passing the middle exhaust pipe 61.

Meanwhile, the exhaust gas bypass channel 99 may be provided in the middle exhaust pipe 61 and the bypass valve 92 may be installed in the exhaust gas bypass channel 99.

Accordingly, when the exhaust gas is discharged via the exhaust bypass channel 99 upon opening the exhaust bypass valve 92, not much exhaust gas may pass the turbine wheel 21 of the turbocharger 20 such that the turbocharger will not be operated substantially.

The middle exhaust pipe 61 and the exhaust bypass channel 99 may be re-combined into one pipe to be connected with the exhaust gas heat exchanger 60. The exhaust gas passing the exhaust gas heat exchanger 60 may be discharged via the exhaust pipe 62.

At this time, the heat radiator 70 having the heat radiation fan 72 installed therein may be connected to the exhaust gas heat exchanger 60. As mentioned above, the exhaust gas heat exchanger 60 may be installed between the coolant pump 55 and the upstream of the engine 30 within the coolant circulation channel and configured to facilitate heat exchange between the coolant and the exhaust gas discharged via the turbocharger 20. The waste heat of the exhaust gas may be collected by the exhaust gas heat exchanger 60.

The coolant circulated by the coolant pump 55 may be drawn into the engine 30 via an inlet pipe 63 by the exhaust gas heat exchanger 60. The coolant having passed the engine 30 may be drawn into the heat radiator 70 and then circulated by the coolant pump 55 to flow towards the exhaust gas heat exchanger 60 again.

As mentioned above, the turbocharger 20 may be installed in the first passage 97 branched from the mixer 16 and the first passage 97 has the first check valve 94 installed therein. The supercharger 90 may be installed in the second passage 96 branched to the other side from the mixer 16 and the second check valve 93 may be installed in the second passage 96.

In this state, according to the embodiment of the present invention, when the exhaust gas is discharged via the exhaust bypass channel 99 upon opening the exhaust bypass valve 92, not much exhaust gas may pass the turbine wheel 21 of the turbocharger 20 such that the turbocharger will not be operated substantially.

At this time, the mixed gas may be supplied along the second passage 96 via the second check valve 93 by the supercharger 90. Hence, the mixed gas may be supplied along the first passage 97 via the first check valve 94 by the turbocharger 20.

Specifically, as the rotation number (rpm) of the engine 30 rises, the operation region of the engine 30 may include the supercharger operation region and the turbocharger operation region.

At this time, the supercharger operation region and the turbocharger operation region may be overlapped with each other at the first rotation number region that is a region having predetermined rotation of the engine 30.

Such the first rotation number region may 1600 through 1750rpm.

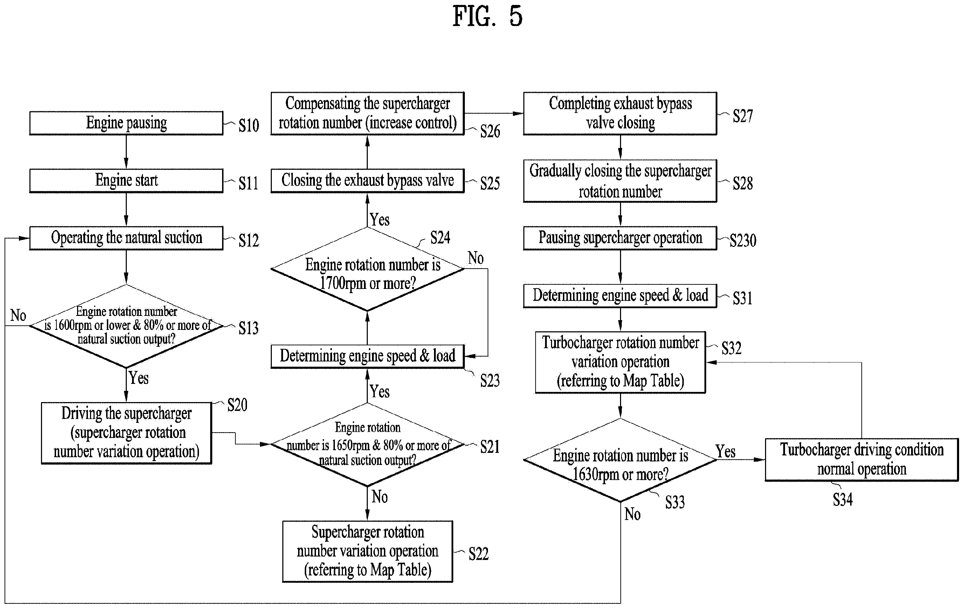

FIG.5 is a diagram schematically illustrating a method for controlling the heat pump system according to one embodiment of the present invention.

In other words, FIG. 5 illustrates a method for controlling the heat pump system shown in FIG. 2.

Hereinafter, referring to FIG.2, the method for controlling the heat pump system according to one embodiment will be descried.

First of all, once the engine state S11 is performed in an engine pausing state S10, the engine 30 starts to operate according to the natural suction S12.

Hence, it may be determined whether the driving condition of the engine 30 is corresponding to the first condition. As one example, it may be determined whether the engine rotation number is in the first region (e.g., 1600rpm or less) and/or the engine output is 80% or more of the natural suction output at a corresponding rotation number S13.

When it is determined that the driving condition of the engine 30 is corresponding to the first condition, the supercharger 90 may be driven S20. At this time, rotation number of the supercharger 90 may be varied according to the engine rotation number and/or the engine output.

Hence, it is determined whether the driving condition of the engine 30 is corresponding to the second condition. As one example, it may be determined whether the engine rotation number is in the second region (e.g., 1600rpm or more) and/or the engine output is 80% or more of the natural suction output at a corresponding rotation number S21.

In this instance, unless the driving condition of the engine 30 is corresponding to the second condition, the rotation number of the supercharger 90 may be varied according to the rotation number and/or the engine output S22. At this time, referring to MAP (Manifold Absolute Power) of the engine, the rotation number of the supercharger 90 may be varied to operate the supercharger.

In contrast, when the driving condition of the engine 30 is corresponding to the second condition, the speed and load of the engine may be determined S23.

Hence, it may be determined whether the rotation number of the engine 30 is in the third region (e.g., 1700rpm or more) S24.

When it is determined that the rotation of the engine 30 is in the third region, the exhaust bypass valve 92 may start to get closed S25. At this time, the exhaust bypass valve 92 may gradually reduce the rotation number per hour, for example, 5% per second.

After that, the rotation number of the supercharger 90 may be compensated S26. Such rotation number compensation may be performed to increase the rotation number. So far, the turbocharger 20 is no operable state where the exhaust bypass valve 92 is not closed completely.

Next, the closing process of the exhaust bypass valve 92 may be complete S27.

Then, the rotation number of the supercharger 90 may be gradually reduced S28. As one example, the rotation number may gradually decrease by 15 percent per 5 minutes.

At this time, the turbocharger 20 may be in a state where the driving starts. Both the supercharger 90 and the turbocharger 20 may be driven in a predetermined engine rotation number region simultaneously. As mentioned above, the region where both of the supercharger 90 and the turbocharger 20 are driven simultaneously may be a range of 1600~1750rpm.

Hence, the operation of the supercharger 90 may be completely stopped S30.

Then, the speed and load of the engine may be re-determined S31.

In this instance, the rotation of the turbocharger 20 may be varied according to the engine rotation number and/or the engine output S32. Specifically, the rotation of the turbocharger 20 may be varied in reference to MAP of the engine 30 while operating the turbocharger 20.

When the rotation number of the engine 30 is a specific valve (e.g., 1630rpm or more) S33, the engine 30 may be operated by normalizing the operation condition of the turbocharger 20 S34.

At this time, when the engine rotation number decreases by 1630rpm or lower, it is controlled to go back to the step of S12 so as to operate the natural suction.

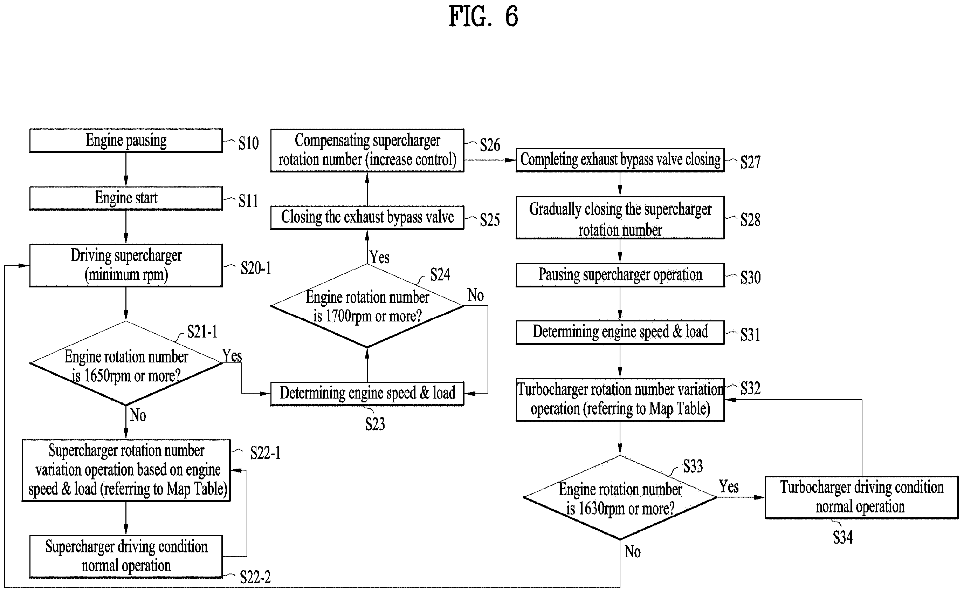

FIG. 6 is a diagram schematically illustrating a method for controlling the heat pump system according to another embodiment of the present invention.

FIG. 6 illustrates the method for controlling the heat pump system shown in FIG. 4.

Hereinafter, referring to FIGS. 4 through 6, the method for controlling the heat pump system according to one embodiment will be descried.

First of all, once the engine starting S11 is performed in the engine pausing state S10, the engine 30 starts to operate by driving the supercharger 90 S20-1. At this time, the supercharger 90 may be driven at the minimum rotation number.

Hence, it may be determined whether the rotation number of the engine 30 is 1650rpm or more.

At this time, unless the rotation number of the engine 30 is 1650rpm or more, the engine may be operated by varying the rotation number of the supercharger 90 based on the engine rotation number and/or the engine output S22-1. At this time, the engine 30 may be operated by varying the rotation number of the supercharger 90 based on the MAP (Manifold Absolute Power) of the engine 30.

Hence, the engine 30 may be normally operated according to the driving condition of the supercharger 90 (e.g., fixing the rotation of the supercharger 90) S22-2.

In contrast, when the rotation number of the engine 30 is 1650rpm or more, the speed and load of the engine may be determined S23.

After that, it may be determined whether the rotation number of the engine 30 is in a third region (e.g., 1700rpm or more) S24.

When the rotation number of the engine 30 is in the third region, the exhaust bypass valve 92 may start to get closed S25. At this time, the exhaust bypass valve 92 may gradually reduce the rotation number per hour (e.g., by 5% per second).

Hence, the rotation number compensation of the supercharger 90 may be performed S26. Such the rotation number compensation of the supercharger 90 may be performed to increase the rotation number. So far, the turbocharger 20 may not be driven in a state where the exhaust bypass valve 92 is not completely closed.

Then, the closing of the exhaust bypass valve 92 may be complete S27.

The rotation number of the supercharger 90 may be gradually reduced S28. As one example, the rotation number of the supercharger 90 may be gradually reduced by 15% per 5 seconds.

At this time, the turbocharger 20 may be in a state where the driving starts. The supercharger 90 and the turbocharger 20 may be simultaneously driven in a preset engine rotation number region. As mentioned above, the engine rotation number region where both the supercharger 90 and the turbocharger 20 are simultaneously driven may be a region from 1600rpm to 1750rpm.

Hence, the operation of the supercharger 90 may completely stops S30.

Upon stopping the operation of the supercharger 90, the speed and load of the engine may be determined S31.

At this time, the engine may be operated by varying the rotation number of the turbocharger according to the engine rotation number and/or the engine output S32. The rotation number of the turbocharger 20 may be varied based on MAP (Manifold Absolute Power) of the engine 30.

When the rotation number of the engine 30 is a specific value (e.g., 1630rpm or more) S33, the engine 30 may be operated by normalizing the operation condition of the turbocharger 20 (e.g., fixing the rotation number of the turbocharger 20).

In this instance, once the engine rotation number falls down to 1630rpm or lower, it may be controlled to go back to the step of S12 again and to perform the natural suction.

As described above, the engine 30 may be driven by the respective optimal performance operation points of the supercharger 90 and the turbocharger 20, using the parallel configuration of the supercharger 90 and the turbocharger 20.

Furthermore, the mixed gas may not flow back to the other one that is not driven when the supercharger 90 and the turbocharger 20 are operated, respectively. Accordingly, the output and efficiency of the engine may be enhanced in the entire operation region.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims.

## Claims

1. A heat pump system comprising:
a compressor (40) configured to compress a refrigerant of an air conditioner;
an engine (30) configured to drive the compressor (40) and comprising a suction unit (32) and an exhaust unit (34), the suction unit (32) being a suction manifold;
a mixer (16) configured to supply a mixed gas of a fuel and air towards the suction unit (32) of the engine (30), the mixed gas being supplied to the suction manifold via a suction channel (24);
a turbocharger (20) comprising a turbine wheel (21) connected to the exhaust unit (34) of the engine (30) and rotatable by an exhaust gas, and an impeller (22) connected to the turbine wheel (21) via a shaft (20a) and configured to compress the mixed gas;
a supercharger (90) connected with the turbocharger (20) in parallel between the mixer (16) and the suction unit (32) of the engine (30);
an intercooler (25) configured to cool the mixed gas having passed at least one of the turbocharger (20) and the supercharger (90); and
an exhaust gas heat exchanger (60) connected to a rear end of the turbine wheel (21) in the exhaust suction (34) of the engine (30),
wherein the turbocharger (20) is installed in a first passage (97) branched from the mixer (16) to a first side and having a first check valve (94) installed therein, wherein the turbocharger (20) is operating in a first engine rotation number range,
wherein the supercharger (90) is installed in a second passage (96) branched from the mixer (16) to a second side, which is opposite the first side, and having a second check valve (93) installed therein, wherein the supercharger (90) is operating in a second engine rotation number range which is smaller than the first engine rotation number range,
wherein the heat pump system further comprises a third passage (98) connected with the intercooler (25) without passing the turbocharger (20) and the supercharger (90) from the mixer (16) and having a third check valve (95) installed therein,
wherein the first passage (97) and the second passage (96) are combined to pass through the intercooler (25),
wherein the suction channel (24) is branched to be a branched channel (23) having one end connected to the turbocharger (20) and the other end connected to the supercharger (90), and
wherein one end of the branched channel (23) is connected to the first passage (97) connected to the turbocharger (20) and the other end of the branched channel (23) is connected to the second passage (96) connected to the supercharger (90) such that the flow of the mixed gas is adjusted by using the first passage (97), the second passage (96) and the third passage (98).

2. The heat pump system of claim 1, wherein the impeller (22) is installed in the first passage (97).

3. The heat pump system of claim 1, wherein as the rotation number of the engine (30) rises, the mixed gas is supplied via the third check valve (95) along the third passage (98) and then via the second check valve (93) along the second passage (96) by the supercharger (90), and via the first check valve (94) along the first passage (97) by the turbocharger (20).

4. The heat pump system of claim 1, wherein the operation region of the engine (30) comprises a natural suction region, a supercharger operation region corresponding to the second engine rotation number range using the supercharger (90), and a turbocharger operation region corresponding to the first engine rotation number range using the turbocharger (20).

5. The heat pump system of claim 4, wherein the supercharger operation region and the turbocharger operation region are overlapped with each other in a first rotation region that is a range between predetermined rotation numbers of the engine.

6. The heat pump system of claim 5, wherein the first rotation region is 1600 ~ 1750rpm.

7. The heat pump system of claim 3, further comprising:
an exhaust bypass channel (99) configured to bypass an exhaust gas from the exhaust unit (34) of the engine (30), without passing the turbine wheel (21) of the turbocharger (20), and having a bypass valve (92) installed therein.

8. A method for controlling a heat pump system comprising a mixer (16) configured to supply a mixed gas of a fuel and air towards a suction unit (32) of an engine (30), the mixed gas being supplied to a suction manifold via a suction channel (24), the suction unit (32) being the suction manifold; a turbocharger (20) comprising a turbine wheel (21) connected to an exhaust unit (34) of the engine (30) and rotatable by an exhaust gas, and an impeller (22) connected to the turbine wheel (21) via a shaft (20a) and configured to compress the mixed gas; a supercharger (90) connected with the turbocharger (20) in parallel between the mixer (16) and the suction unit (32) of the engine (30); and an exhaust bypass channel (99) configured to bypass an exhaust gas from the exhaust unit (34) of the engine (30), without passing the turbine wheel (21) of the turbocharger (20), and having a bypass valve (92) installed therein, the heat pump system further comprising a third passage (98) connected with the intercooler (25) without passing the turbocharger (20) and the supercharger (90) from the mixer (16) and having a third check valve (95) installed therein, wherein the turbocharger (20) is installed in a first passage (97) branched from the mixer (16) to a first side and having a first check valve (94) installed therein, wherein the turbocharger (20) is operating in a first engine rotation number range, wherein the supercharger (90) is installed in a second passage (96) branched from the mixer (16) to a second side, which is opposite the first side, and having a second check valve (93) installed therein, wherein the supercharger (90) is operating in a second engine rotation number range which is smaller than the first engine rotation number range,
and wherein the first passage (97) and the second passage (96) are combined to pass through the intercooler (25),
wherein the suction channel (24) is branched to be a branched channel (23) having one end connected to the turbocharger (20) and the other end connected to the supercharger (90), and wherein one end of the branched channel (23) is connected to the first passage (97) connected to the turbocharger (20) and the other end of the branched channel (23) is connected to the second passage (96) connected to the supercharger (90), such that the flow of mixed gas is adjusted by using the first passage (97), the second passage (96) and the third passage (98),
the control method comprising steps of:
supplying air by opening the bypass valve (92) when the engine rotation number is in a first region;
driving the supercharger (90) when the engine rotation number is in a second region that is larger than the first region;
closing the exhaust bypass channel (99);
reducing the rotation number of the supercharger (90) gradually; and
operating the engine (30) by driving the turbocharger (20) when the engine rotation number is in a third region that is larger than the second region.

9. The method for controlling the heat pump system of claim 8, further comprising:
compensating the rotation number of the supercharger (90) after driving the supercharger (90).

10. The method for controlling the heat pump system of claim 9, wherein the step of compensating the rotation number of the supercharger (90) is performed to increase the rotation number of the supercharger (90).

11. The method for controlling the heat pump system of claim 8, wherein the second region is overlapped with the third region at a first rotation number region.

12. The method for controlling the heat pump system of claim 11, wherein the first rotation number region is 1600∼1750rpm.

13. The method for controlling the heat pump system of claim 11, wherein the supercharger (90) and the turbocharger (20) are simultaneously driven in the first rotation number region.

14. The method for controlling the heat pump system of claim 8, further comprising:
re-determining the speed and load of the engine (30),
wherein as the rotation number of the engine (30) rises, the engine (30) is operated by fixing the rotation of the turbocharger (20) or the step of supplying the air is performed.

## Patentansprüche

1. Eine Wärmepumpe, umfassend:
einen Kompressor (40), der konfiguriert ist, um ein Kältemittel einer Klimaanlage zu komprimieren;
einen Motor (30), der konfiguriert ist, um den Kompressor (40) anzutreiben, und der eine Ansaugeinheit (32) und eine Absaugeinheit (34) umfasst, wobei die Ansaugeinheit (32) ein Ansaugkrümmer ist;
einen Mischer (16), der konfiguriert ist, um ein Gasgemisch aus einem Kraftstoff und Luft in Richtung der Ansaugeinheit (32) des Motors (30) zuzuführen, wobei das Gasgemisch über einen Ansaugkanal (24) dem Ansaugkrümmer zugeführt wird;
einen Turbolader (20) mit einem Turbinenrad (21), der mit der Absaugeinheit (34) des Motors (30) verbunden und durch ein Abgas drehbar ist, und ein Flügelrad (22), das mit dem Turbinenrad (21) über eine Welle (20a) verbunden und so konfiguriert ist, dass es das Gasgemisch verdichtet;
ein Aufladegerät (90), das mit dem Turbolader (20) zwischen dem Mischer (16) und der Ansaugeinheit (32) des Motors (30) parallelgeschaltet ist;
einen Zwischenkühler (25), der so konfiguriert ist, dass er das Gasgemisch kühlt, nachdem es mindestens einen von dem Turbolader (20) und dem Aufladegerät (90) durchlaufen hat; und
einen Abgaswärmetauscher (60), der mit dem hinteren Ende des Turbinenrades (21) in der Absaugeinheit (34) des Motors (30) verbunden ist,
wobei der Turbolader (20) in einem ersten Kanal (97) installiert ist, der von dem Mischer (16) zu einer ersten Seite abzweigt, und der ein darin installiertes erstes Rückschlagventil (94) aufweist, wobei der Turbolader (20) in einem ersten Motordrehzahlbereich betrieben wird,
wobei das Aufladegerät (90) in einem zweiten Kanal (96) installiert ist, der von dem Mischer (16) zu einer zweiten Seite abzweigt, die der ersten Seite gegenüberliegt, und der ein darin installiertes zweites Rückschlagventil (93) aufweist, wobei das Aufladegerät (90) in einem zweiten Motordrehzahlbereich betrieben wird, der kleiner ist als der erste Motordrehzahlbereich,
wobei das Wärmepumpensystem ferner einen dritten Kanal (98) umfasst, der mit dem Zwischenkühler (25) verbunden ist, ohne den Turbolader (20) und das Aufladegerät (90) vom Mischer (16) her zu durchlaufen, und der ein darin installiertes drittes Rückschlagventil (95) aufweist,
wobei der erste Kanal (97) und der zweite Kanal (96) kombiniert sind, um den Zwischenkühler (25) zu durchlaufen,
wobei der Ansaugkanal (24) so abzweigt, um ein abgezweigter Kanal (23) zu sein, dessen eines Ende mit dem Turbolader (20) und dessen anderes Ende mit dem Aufladegerät (90) verbunden ist, und
wobei ein Ende des abgezweigten Kanals (23) mit dem ersten Kanal (97) verbunden ist, der an das Aufladegerät (20) verbunden ist, und das andere Ende des abgezweigten Kanals (23) mit dem zweiten Kanal (96) verbunden ist, der an das Aufladegerät (90) verbunden ist, so dass die Strömung des Gasgemisches durch Verwendung des ersten Kanals (97), des zweiten Kanals (96) und des dritten Kanals (98) angepasst wird.

2. Wärmepumpensystem nach Anspruch 1, wobei das Flügelrad (22) in den ersten Kanal (97) eingebaut ist.

3. Wärmepumpensystem nach Anspruch 1, wobei mit steigender Drehzahl des Motors (30) das Gasgemisch über ein drittes Rückschlagventil (95) entlang des dritten Kanals (98) und über das zweite Rückschlagventil (93) entlang des zweiten Kanals (96) durch das Aufladegerät (90) und über das erste Rückschlagventil (94) entlang des ersten Kanals (97) durch den Turbolader (20) zugeführt wird.

4. Wärmepumpensystem nach Anspruch 1, wobei der Betriebsbereich des Motors (30) einen natürlichen Ansaugbereich, einen Betriebsbereich des Aufladegerätes, der dem zweiten Motordrehzahlbereich unter Verwendung des Aufladegeräts (90) entspricht, und einen Betriebsbereich des Turboladers umfasst, der dem ersten Motordrehzahlbereich unter Verwendung des Turboladers (20) entspricht.

5. Wärmepumpensystem nach Anspruch 4, wobei sich der Betriebsbereich des Aufladegerätes und der Betriebsbereich des Turboladers sich miteinander in einem ersten Drehzahlbereich überlappen, der ein Umfang zwischen vorbestimmten Drehzahlen des Motors darstellt.

6. Wärmepumpensystem nach Anspruch 5, wobei der erste Drehzahlbereich 1600 ~ 1750 U/min beträgt.

7. Wärmepumpensystem nach Anspruch 3, ferner umfassend:
einen Abgasbypasskanal (99), der konfiguriert ist, um ein Abgas von der Abgaseinheit (34) des Motors (30) umzuleiten, ohne das Turbinenrad (21) des Turboladers (20) zu durchlaufen, und der ein darin installiertes Bypassventil (92) aufweist.

8. Verfahren zur Steuerung eines Wärmepumpensystems, das einen Mischer (16) umfasst, der so konfiguriert ist, dass er einer Ansaugeinheit (32) eines Motors (30) ein Gasgemisch aus einem Kraftstoff und Luft zuführt, wobei das Gasgemisch über einen Ansaugkanal (24) einem Ansaugkrümmer zugeführt wird, wobei die Ansaugeinheit (32) der Ansaugkrümmer ist; ein Turbolader (20), der ein Turbinenrad (21), das mit einer Abgaseinheit (34) des Motors (30) verbunden und durch ein Abgas drehbar ist, und ein Flügelrad (22) umfasst, das mit dem Turbinenrad (21) über eine Welle (20a) verbunden und so konfiguriert ist, dass es das Gasgemisch komprimiert; ein Aufladegerät (90), das mit dem Turbolader (20) zwischen dem Mischer (16) und der Ansaugeinheit (32) des Motors (30) parallelgeschaltet ist; und ein Absaugbypasskanal (99), der so konfiguriert ist, dass er ein Abgas von der Absaugeinheit (34) des Motors (30) umleitet, ohne das Turbinenrad (21) des Turboladers (20) zu durchlaufen, und der ein darin installiertes Bypassventil (92) aufweist, wobei das Wärmepumpensystem ferner einen dritten Kanal (98) umfasst, der mit dem Zwischenkühler (25) verbunden ist, ohne den Turbolader (20) und das Aufladegerät (90) vom Mischer (16) her zu durchlaufen, und der ein darin installiertes drittes Rückschlagventil (95) aufweist, wobei der Turbolader (20) in einem ersten Kanal (97) installiert ist, der von dem Mischer (16) zu einer ersten Seite abzweigt und ein darin installierts erstes Rückschlagventil (94) aufweist, wobei der Turbolader (20) in einem ersten Motordrehzahlbereich betrieben wird, wobei das Aufladegerät (90) in einem zweiten Kanal (96) installiert ist, der vom Mischer (16) zu einer zweiten Seite abzweigt, die der ersten Seite gegenüberliegt, und ein darin installierts zweites Rückschlagventil (93) aufweist, wobei das Aufladegerät (90) in einem zweiten Motordrehzahlbereich betrieben wird, der kleiner als der erste Motordrehzahlbereich ist,
und wobei der erste Kanal (97) und der zweite Kanal (96) kombiniert sind, um den Zwischenkühler (25) zu durchlaufen,
wobei der Ansaugkanal (24) so abzweigt, um ein abgezweigter Kanal (23) zu sein, dessen eines Ende mit dem Turbolader (20) und dessen anderes Ende mit dem Aufladegerät (90) verbunden ist, und wobei ein Ende des abgezweigten Kanals (23) mit dem ersten Kanal (97) verbunden ist, der an den Turbolader (20) verbunden ist, und das andere Ende des verzweigten Kanals (23) mit dem zweiten Kanal (96) verbunden ist, der an das Aufladegerät (90) verbunden ist, und zwar so, dass der Durchfluss des Gasgemisches durch Verwendung des ersten Kanals (97), des zweiten Kanals (96) und des dritten Kanals (98) angepasst wird,
wobei das Kontrollverfahren die folgenden Schritte umfasst:
Zuführen von Luft durch Öffnen des Bypassventils (92), wenn sich die Motordrehzahl in einem ersten Bereich befindet;
Antreiben des Aufladegerätes (90), wenn die Motordrehzahl in einem zweiten Bereich liegt, der größer als der erste Bereich ist;
Schließen des Abgasbypasskanals (99);
allmähliches Verringern der Drehzahl des Aufladegerätes (90); und
Betreiben des Motors (30) durch Antreiben des Turboladers (20), wenn die Motordrehzahl in einem dritten Bereich liegt, der größer als der zweite Bereich ist;

9. Verfahren zur Steuerung des Wärmepumpensystems nach Anspruch 8, ferner umfassend:
Ausgleichen der Drehzahl des Aufladegerätes (90) nach dem Antreiben des Aufladegerätes (90).

10. Verfahren zur Steuerung des Wärmepumpensystems nach Anspruch 9, wobei der Schritt des Ausgleichens der Drehzahl des Aufladegerätes (90) durchgeführt wird, um die Drehzahl des Aufladegerätes (90) zu erhöhen.

11. Verfahren zur Steuerung des Wärmepumpensystems nach Anspruch 8, wobei sich der zweite Bereich mit dem dritten Bereich in einem ersten Drehzahlbereich überlappt.

12. Verfahren zur Steuerung des Wärmepumpensystems nach Anspruch 11, wobei der erste Drehzahlbereich 1600 ~1750 U/min beträgt.

13. Verfahren zur Steuerung des Wärmepumpensystems nach Anspruch 11, wobei das Aufladegerät (90) und der Turbolader (20) im ersten Drehzahlbereich gleichzeitig angetrieben werden.

14. Verfahren zur Steuerung des Wärmepumpensystems nach Anspruch 8, ferner umfassend:
Neufestlegung der Geschwindigkeit und der Last des Motors (30),
wobei bei steigender Drehzahl des Motors (30) der Motor (30) durch Festlegen der Drehzahl des Turboladers (20) betrieben wird, oder der Schritt der Luftzufuhr durchgeführt wird.

## Revendications

1. Système de pompe à chaleur comprenant :
un compresseur (40) configuré pour compresser un réfrigérant d'un climatiseur ;
un moteur (30) configuré pour entraîner le compresseur (40) et comprenant une unité d'aspiration (32) et une unité d'échappement (34), l'unité d'aspiration (32) étant un collecteur d'aspiration ;
un mélangeur (16) configuré pour distribuer un gaz mélangé d'un combustible et d'air vers l'unité d'aspiration (32) du moteur (30), le gaz mélangé étant distribué au collecteur d'aspiration via un canal d'aspiration (24) ;
un turbocompresseur (20) comprenant une roue de turbine (21) reliée à l'unité d'échappement (34) du moteur (30) et rotative par un gaz d'échappement, et un rotor (22) relié à la roue de turbine (21) via un arbre (20a) et configuré pour comprimer le gaz mélangé ;
un surcompresseur (90) relié au turbocompresseur (20) en parallèle entre le mélangeur (16) et l'unité d'aspiration (32) du moteur (30) ;
un refroidisseur intermédiaire (25) configuré pour refroidir le gaz mélangé qui est passé par au moins l'un parmi le turbocompresseur (20) et le surcompresseur (90) ; et un échangeur de chaleur de gaz d'échappement (60) relié à une extrémité arrière de la roue de turbine (21) dans l'aspiration d'échappement (34) du moteur (30),
dans lequel le turbocompresseur (20) est installé dans un premier passage (97) ramifié à partir du mélangeur (16) jusqu'à un premier côté et comportant un premier clapet antiretour (94) installé dans celui-ci, dans lequel le turbocompresseur (20) fonctionne dans une première plage de nombres de tours de moteur,
dans lequel le surcompresseur (90) est installé dans un deuxième passage (96) ramifié à partir du mélangeur (16) jusqu'à un second côté, qui est à l'opposé du premier côté, et comportant un deuxième clapet antiretour (93) installé dans celui-ci, dans lequel le surcompresseur (90) fonctionne dans une seconde plage de nombres de tours de moteur qui est plus petite que la première plage de nombres de tours de moteur,
dans lequel le système de pompe à chaleur comprend en outre un troisième passage (98) relié au refroidisseur intermédiaire (25) sans passer par le turbocompresseur (20) et le surcompresseur (90) à partir du mélangeur (16), et comportant un troisième clapet antiretour (95) installé dans celui-ci,
dans lequel le premier passage (97) et le deuxième passage (96) sont combinés pour passer à travers le refroidisseur intermédiaire (25),
dans lequel le canal d'aspiration (24) est ramifié pour être un canal ramifié (23) comportant une extrémité reliée au turbocompresseur (20) et l'autre extrémité reliée au surcompresseur (90), et
dans lequel une extrémité du canal ramifié (23) est reliée au premier passage (97) relié au turbocompresseur (20) et l'autre extrémité du canal ramifié (23) est reliée au deuxième passage (96) relié au surcompresseur (90) de sorte que l'écoulement du gaz mélangé soit ajusté en utilisant le premier passage (97), le deuxième passage (96) et le troisième passage (98).

2. Système de pompe à chaleur selon la revendication 1, dans lequel le rotor (22) est installé dans le premier passage (97).

3. Système de pompe à chaleur selon la revendication 1, dans lequel, au fur et à mesure de l'augmentation du nombre de tours du moteur (30), le gaz mélangé est distribué via le troisième clapet antiretour (95) le long du troisième passage (98) puis via le deuxième clapet antiretour (93) le long du deuxième passage (96) par le surcompresseur (90), et via le premier clapet antiretour (94) le long du premier passage (97) par le turbocompresseur (20).

4. Système de pompe à chaleur selon la revendication 1, dans lequel la région de fonctionnement du moteur (30) comprend une région d'aspiration naturelle, une région de fonctionnement de surcompresseur correspondant à la seconde plage de nombres de tours de moteur en utilisant le surcompresseur (90), et une région de fonctionnement de turbocompresseur correspondant à la première plage de nombres de tours de moteur en utilisant le turbocompresseur (20).

5. Système de pompe à chaleur selon la revendication 4, dans lequel la région de fonctionnement de surcompresseur et la région de fonctionnement de turbocompresseur se chevauchent dans une première région de nombre de tours qui est une plage entre des nombres de tours prédéterminés du moteur.

6. Système de pompe à chaleur selon la revendication 5, dans lequel la première région de nombre de tours est de 1600 à 1750 tours par minute.

7. Système de pompe à chaleur selon la revendication 3, comprenant en outre :
un canal de dérivation d'échappement (99) configuré pour dériver un gaz d'échappement depuis l'unité d'échappement (34) du moteur (30), sans passer par la roue de turbine (21) du turbocompresseur (20), et comportant un clapet de dérivation (92) installé dans celui-ci.

8. Procédé de commande d'un système de pompe à chaleur comprenant un mélangeur (16) configuré pour distribuer un gaz mélangé d'un combustible et d'air vers une unité d'aspiration (32) d'un moteur (30), le gaz mélangé étant distribué à un collecteur d'aspiration via un canal d'aspiration (24), l'unité d'aspiration (32) étant le collecteur d'aspiration ; un turbocompresseur (20) comprenant une roue de turbine (21) reliée à une unité d'échappement (34) du moteur (30) et rotative par un gaz d'échappement, et un rotor (22) relié à la roue de turbine (21) via un arbre (20a) et configuré pour comprimer le gaz mélangé ; un surcompresseur (90) relié au turbocompresseur (20) en parallèle entre le mélangeur (16) et l'unité d'aspiration (32) du moteur (30) ; et un canal de dérivation d'échappement (99) configuré pour dériver un gaz d'échappement depuis l'unité d'échappement (34) du moteur (30), sans passer par la roue de turbine (21) du turbocompresseur (20), et comportant un clapet de dérivation (92) installé dans celui-ci, le système de pompe à chaleur comprenant en outre un troisième passage (98) relié au refroidisseur intermédiaire (25) sans passer par le turbocompresseur (20) et le surcompresseur (90) à partir du mélangeur (16), et comportant un troisième clapet antiretour (95) installé dans celui-ci, dans lequel le turbocompresseur (20) est installé dans un premier passage (97) ramifié à partir du mélangeur (16) jusqu'à un premier côté et comportant un premier clapet antiretour (94) installé dans celui-ci, dans lequel le turbocompresseur (20) fonctionne dans une première plage de nombres de tours de moteur, dans lequel le surcompresseur (90) est installé dans un deuxième passage (96) ramifié à partir du mélangeur (16) jusqu'à un second côté, qui est à l'opposé du premier côté, et comportant un deuxième clapet antiretour (93) installé dans celui-ci, dans lequel le surcompresseur (90) fonctionne dans une seconde plage de nombres de tours de moteur qui est plus petite que la première plage de nombres de tours de moteur,
et dans lequel le premier passage (97) et le deuxième passage (96) sont combinés pour passer à travers le refroidisseur intermédiaire (25),
dans lequel le canal d'aspiration (24) est ramifié pour être un canal ramifié (23) comportant une extrémité reliée au turbocompresseur (20) et l'autre extrémité reliée au surcompresseur (90), et dans lequel une extrémité du canal ramifié (23) est reliée au premier passage (97) relié au turbocompresseur (20) et l'autre extrémité du canal ramifié (23) est reliée au deuxième passage (96) relié au surcompresseur (90), de sorte que l'écoulement du gaz mélangé soit ajusté en utilisant le premier passage (97), le deuxième passage (96) et le troisième passage (98) ;
le procédé de commande comprenant les étapes suivantes :
la distribution d'air en ouvrant le clapet de dérivation (92) lorsque le nombre de tours de moteur est dans une première région ;
l'entraînement du surcompresseur (90) lorsque le nombre de tours de moteur est dans une deuxième région qui est plus grande que la première région ;
la fermeture du canal de dérivation d'échappement (99) ;
la réduction progressive du nombre de tours du surcompresseur (90) ; et
le fonctionnement du moteur (30) par l'entraînement du turbocompresseur (20) lorsque le nombre de tours de moteur est dans une troisième région qui est plus grande que la deuxième région.

9. Procédé de commande de système de pompe à chaleur selon la revendication 8, comprenant en outre :
la compensation du nombre de tours du surcompresseur (90) après l'entraînement du surcompresseur (90).

10. Procédé de commande de système de pompe à chaleur selon la revendication 9, dans lequel l'étape de la compensation du nombre de tours du surcompresseur (90) est réalisée pour augmenter le nombre de tours du surcompresseur (90).

11. Procédé de commande de système de pompe à chaleur selon la revendication 8, dans lequel la deuxième région est chevauchée par la troisième région au niveau d'une première région de nombre de tours.

12. Procédé de commande de système de pompe à chaleur selon la revendication 11, dans lequel la première région de nombre de tours est de 1600 à 1750 tours par minute.

13. Procédé de commande de système de pompe à chaleur selon la revendication 11, dans lequel le surcompresseur (90) et le turbocompresseur (20) sont simultanément entraînés dans la première région de nombre de tours.

14. Procédé de commande de système de pompe à chaleur selon la revendication 8, comprenant en outre :
la re-détermination de la vitesse et de la charge du moteur (30),
dans lequel, au fur et à mesure de l'augmentation du nombre de tours du moteur (30), le moteur (30) est actionné par la fixation de la rotation du turbocompresseur (20) ou l'étape de la distribution de l'air est réalisée.
